Europäisches Patentamt

(19) European Patent Office

Office européen des brevets

(11) Numéro de publication : **0 325 185 B1**

## (12) FASCICULE DE BREVET EUROPEEN

(45) Date de publication du fascicule du brevet :
08.01.92 Bulletin 92/02

(51) Int. Cl.⁵ : **C02F 1/48**, C23F 15/00

(21) Numéro de dépôt : **89100642.1**

(22) Date de dépôt : **14.01.89**

(54) Appareil pour le traitement anti-tartre de l'eau par utilisation d'un champ magnétique.

<table>
<tr><td>

(30) Priorité : **18.01.88 FR 8800819**

(43) Date de publication de la demande :
**26.07.89 Bulletin 89/30**

(45) Mention de la délivrance du brevet :
**08.01.92 Bulletin 92/02**

(84) Etats contractants désignés :
**AT BE CH DE ES FR GB IT LI NL SE**

(56) Documents cités :
**EP-A- 0 119 368**
**FR-A- 2 577 543**
**US-A- 4 216 092**

</td><td>

(73) Titulaire : **KERANBO S.A.R.L.**
**Z.I.de la Chatelaine**
**F-74240 Gaillard (FR)**

(72) Inventeur : **Bochaton, Pierre**
**3, avenue des Acacias Ambilly**
**F-74100 Annemasse (FR)**

(74) Mandataire : **Gasquet, Denis**
**CABINET GASQUET, Les Pléiades, Park-Nord**
**Annecy**
**F-74370 Metz Tessy (FR)**

</td></tr>
</table>

## Description

La présente invention est relative aux appareils pour le traitement anti-tartre de l'eau contenant du carbonate de calcium, dans lesquels l'eau est soumise à un parcours hélicoïdal autour d'une colonne d'aimants permanents.

On connaît déjà différents dispositifs de ce type, ayant pour but d'éviter l'entartrage à l'intérieur des canalisations, réservoirs ou corps chauffants des préparateurs d'eau chaude et de vapeur.

Le procédé consiste à faire circuler l'eau à travers un champ magnétique créé par plusieurs aimants permanents, de forme cylindrique, juxtaposés de telle manière que les pôles voisins soient de même nature et séparés entre eux par des entretoises de fer à faible teneur en carbone. Les aimants sont logés dans un tube constitué d'un matériau perméable au champ magnétique. Dans le même axe, un tube extérieur en fer doux et de plus gros diamètre laisse un passage annulaire à l'eau qui traverse ainsi le champ magnétique.

Le principe de fonctionnement de ces appareils est de perturber et de changer la forme cristalline des particules ou colloïdes, constitués d'agrégats de molécules non dissociées contenues dans l'eau. Dans le circuit, étant chargées électro-statiquement, ces particules colloïdales vont s'agglomérer et former des cristaux qui seront entrainés par le flux de l'eau, tout en ayant un effet curatif sur le tartre déjà incrusté à l'intérieur des conduites.

On sait que l'écoulement de l'eau autour des aimants est une des conditions à remplir pour permettre à ceux-ci d'agir sur la forme incrustante du calcaire. Pour que le fonctionnement des appareils soit efficace, la trajectoire de l'eau doit être hélicoïdale et à pas aussi faible que possible.

Tous les dispositifs connus qui emploient des rainures, chicanes ou trous provoquant l'écoulement hélicoïdal laissent apparaitre des inconvénients : écoulement de l'eau à grand pas, perte de pression ou perte de charge et impuretés métalliques se fixant sur le tube comportant les aimants.

Il en est ainsi, par exemple, du dispositif décrit dans la demande de brevet FR 2586285 où le tube extérieur est muni sur sa face interne de rainures hélicoïdales. Ces rainures sont d'une réalisation très difficile donc très onéreuse et il n'est pratiquement pas possible d'obtenir un pas suffisamment fin.

Dans la demande de brevet FR 2577543, on se contente de provoquer le mouvement hélicoïdal au moyen d'un embout d'entrée de construction extrêmement complexe et qui donne à l'eau une arrivée de direction tangentielle, mais l'eau, non autrement guidée, reprend bien vite une direction quasiment axiale dans le dispositif. Sinon, l'hélice doit être matérialisée par un tube rapporté et enroulé entre la colonne d'aimants et le tube extérieur. Ou encore, une pièce cylindrique formée de deux coquilles obture complètement l'espace entre les aimants et le tube extérieur, à l'exception d'une gorge hélicoïdale ménagée sur la surface extérieure de ces coquilles. Quelle que soit la solution adoptée, la construction est des plus complexes, donc d'un prix de revient très élevé du fait des difficultés de réalisation. En outre, les passages forcés pour l'eau sont générateurs de pertes de charge considérables et restreignent considérablement les débits pour un encombrement hors tout donné.

Dans l'état de la technique évoqué, il faut en outre constater que l'arrivée de l'eau dans le dispositif avant que lui soit imprimé un mouvement hélicoïdal, et sa sortie, sont toujours axiales par rapport à l'appareil, ce qui implique qu'il n'est pas possible d'accéder à l'intérieur de l'appareil pour un nettoyage, par exemple, sans séparer complètement l'appareil de la conduite d'eau tant en amont qu'en aval, ce qui représente un inconvénient majeur.

La présente invention vise à remédier à ces inconvénients graves en proposant un appareil qui, tout en assurant un parcours hélicoïdal sur une distance suffisante, permet un nettoyage facile de celui-ci sans qu'il y ait lieu de séparer le tube extérieur ni en aval ni en amont, de la conduite sur laquelle il est monté.

Les caractéristiques de l'invention et ses avantages apparaitront à la lumière de la description qui suit de plusieurs modes d'exécution et pour l'intelligence de laquelle on se référera aux dessins, dont :

— la figure 1 est une vue en coupe axiale d'un premier mode d'exécution d'un appareil selon l'invention,

— la figure 2 est une coupe du même appareil selon un plan normal à sa direction axiale et passant par la droite YY' de la figure 1,

— la figure 3 illustre selon le même type de coupe que la figure 1 un détail d'un second mode d'exécution de l'invention, et

— la figure 4 un troisième mode d'exécution.

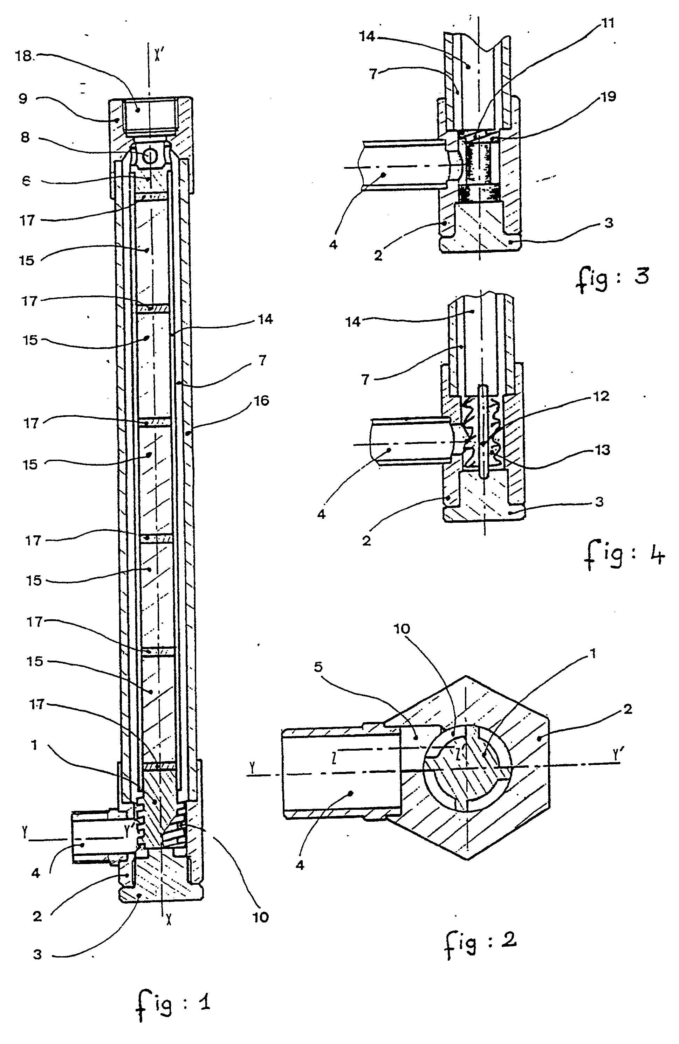

On reconnait à la figure 1 un appareil comportant des éléments connus de l'état de la technique. Une colonne d'aimants permanents 15 séparés par des entretoises 17 magnétiquement neutres est contenue dans une enveloppe cylindrique 14 également neutre. La colonne est disposée coaxialement XX' à un tube extérieur 16 également neutre en laissant libre entre eux un espace annulaire 7 dans lequel l'eau à traiter circule. Un embout d'arrivée en amont 1 à 4, 10 et un embout de sortie en aval 6, 8, 9, 18 permettent le raccordement à une conduite d'eau (non représentée) à traiter. Le détail des pièces 6, 8, 9, 18 de l'embout de sortie ne fait pas partie de l'invention, et étant connu de l'état de la technique, ne nécessite pas de développement.

Comme connu, le parcours de l'eau dans l'espace annulaire 7 doit être hélicoïdal et de pas aussi faible que possible. Selon l'invention, ce but est atteint par la construction particulière de l'embout d'entrée 1 à 4, 10.

Cet embout comporte un raccord d'entrée 2 coaxial XX' au tube extérieur 16 et rapporté sur celui-ci, ouvert en bout où il est fermé par un bouchon 3 par exemple fileté. Il est pourvu sensiblement perpendiculairement YY' à l'axe XX' de l'appareil d'un raccord secondaire rapporté 4 monté sur une conduite (non représentée) d'arrivée d'eau à traiter ; les espaces intérieurs du raccord 2 et du raccord secondaire communiquent librement et directement, ou selon une variante par un conduit 5 désaxé ZZ' par rapport à l'axe YY' du raccord secondaire 4 pour amener l'eau à l'intérieur du raccord 2 approximativement tangentiellement par rapport à la surface interne de celui-ci (comme illustré par la figure 2). A l'intérieur du raccord 2, et disposée axialement XX', s'appuyant d'une part sur la colonne d'aimants 14, 15, 17 et d'autre part, sur le bouchon 3, est disposée une pièce de forme 1 usinée ou moulée, sensiblement cylindrique, sauf qu'elle présente sur sa surface latérale, une ou de préférence plusieurs gorges hélicoïdales 10 à pas fin. La pièce de forme 1 peut être venue de moulage ou usinée. L'espace annulaire 7 communique ainsi par l'intermédiaire de la ou des gorges 10 avec l'intérieur du raccord secondaire 4. L'eau arrivant par ce raccord secondaire 4 aura donc un cheminement hélicoïdal forcé dans les gorges 10 et conservera le mouvement imprimé en arrivant et en parcourant l'espace annulaire 7 jusqu'à la sortie 8, 18 de l'appareil. Cet effet est bien sûr favorisé, donc avec moins de perte de charge si l'accès de l'eau est désaxé selon la variante de la figure 2.

Comme on le voit de ce qui précède, on obtient ainsi le cheminement hélicoïdal désiré dans l'appareil dans des conditions satisfaisantes et relativement simples.

Par ailleurs, hormis le fait que l'arrivée de l'eau 4, YY', est normale à l'axe XX' général de l'appareil, l'extrémité amont de celui-ci, obturée par le bouchon 3 reste toujours accessible. Il est donc possible, sans séparer le corps 16 et les embouts 1 à 4 et 6, 8, 9, 18 de la conduite d'eau, de démonter l'intérieur de l'appareil en enlevant le bouchon 3 et de procéder au nettoyage et à l'entretien de ses parties actives, à savoir la pièce de forme 10 et la colonne d'aimants 14, 15, 17 sur lesquelles des impuretés métalliques sont susceptibles de se fixer.

A la figure 3, est illustré un second mode d'exécution simplifié pour des utilisations dans lesquelles les exigences sont moindres. La pièce de forme 1 laisse libre dans le raccord 2 un espace annulaire communiquant avec l'espace annulaire 7 de l'appareil proprement dit par des fentes inclinées 11 ménagées dans un épaulement supérieur 19 de la pièce de forme 1 et servant de guidage à cette pièce 1 dans le raccord 2.

Un autre mode d'exécution est illustré par la figure 4. Dans ce cas, la pièce de forme 13 est mobile en rotation à l'intérieur du raccord 2 autour d'un axe fixe 12 coaxial XX' à l'appareil et supporté par le bouchon 3.

## Revendications

1. Appareil pour le traitement anti-tartre de l'eau, comprenant une colonne d'aimants permanents (15) séparés par des entretoises (17) et contenus dans une enveloppe cylindrique (14), cette colonne étant disposée dans, et coaxialement à (XX') un tube extérieur (16) en ménageant entre elle (14, 15, 17) et ce tube (16) un espace annulaire (7) pour la circulation de l'eau à traiter entre un embout d'entrée (1 à 4) et un embout de sortie (6, 8, 9, 18), caractérisé par le fait que l'embout d'entrée (1 à 4, 10) comporte un raccord (2) coaxial (XX') au tube (16) pourvu d'un raccord secondaire (4) à une conduite d'eau sensiblement perpendiculaire (YY') à l'axe (XX') du tube (16), et qu'une pièce de forme (1, 19, 13) contenue dans le, et coaxiale (XX') au raccord (2) présente au moins une gorge ou fente hélicoïdale (10, 11) de faible pas dans laquelle chemine l'eau entre le raccord secondaire (4) et l'espace annulaire (7).

2. Appareil selon la revendication 1, caractérisé par le fait que la communication entre le raccord secondaire (4) et l'intérieur du raccord (2) est désaxée (ZZ') par rapport à l'axe (YY') du raccord secondaire (4) et à l'axe (XX') du raccord (2).

3. Appareil selon la revendication 1 ou la revendication 2, caractérisé par le fait que la pièce de forme (1) comporte plusieurs gorges ou fentes (10, 11).

4. Appareil selon l'une quelconque des revendications 1 à 3, caractérisé par le fait que le raccord (2) est fermé à son extrémité opposée au tube (16) par un bouchon démontable (3) supportant la pièce de forme (1, 19, 13).

5. Appareil selon l'une quelconque des revendications 1 à 4, caractérisé par le fait que la pièce de forme (1, 13) est sensiblement cylindrique, la ou les gorges (10) étant ménagées à sa surface latérale.

6. Appareil selon l'une quelconque des revendications 1 à 4, caractérisé par le fait que la pièce de forme (1) laisse libre dans le raccord (2) un espace annulaire communiquant avec l'espace annulaire (7) dans le tube (16) par des fentes inclinées (11) ménagées dans un épaulement supérieur (19).

7. Appareil selon l'une quelconque des revendications 1 à 4, caractérisé par le fait que la pièce de forme (13) est mobile en rotation dans le raccord (2) autour de son axe (XX').

8. Appareil selon la revendication 4, caractérisé par le fait que la pièce de forme (13) est mobile en rotation dans le raccord (2) autour d'un axe (12) supporté par le bouchon (3).

9. Appareil selon l'une quelconque des revendications 1 à 8, caractérisé par le fait que la pièce de forme (1, 19, 13) est obtenue par moulage.

10. Appareil selon l'une quelconque des revendications 1 à 8, caractérisé par le fait que la pièce de forme (1, 19, 13) est obtenue par usinage.

**Patentansprüche**

1. Vorrichtung zur Kesselsteinverhütung von Wasser, die eine Reihe von Permanentmagneten (15) aufweist, die durch Zwischenwände (17) getrennt und in einer zylinderförmigen Umhüllung (14) enthalten sind, wobei diese Reihe in und koaxial (XX') mit einem äußeren Rohr (16) angeordnet ist und zwischen sich (14, 15, 17) und diesem Rohr (16) einen ringförmigen Raum (7) für den Kreislauf des zu behandelnden Wassers zwischen einem Eingangsansatz (1-4) und einem Ausgangsansatz (6, 8, 9, 18) freiläßt. **dadurch gekennzeichnet,** daß der Eingangsansatz (1-4) ein Verbindungsstück (2) aufweist, das koaxial (XX') mit dem Rohr (16) ist und mit einem zur Achse (XX') des Rohres (16) im wesentlichen senkrechten (YY') sekundären Verbindungsstück (4) zu einer Wasserleitung versehen ist, und daß ein Formstück (1, 19, 13), das in und koaxial (XX') mit dem Verbindungsstück (2) angeordnet ist, mindestens eine spiralförmige Nut oder Rille (10, 11) mit kleinem Schritt aufweist, in der das Wasser zwischen dem sekundären Verbindungsstück (4) und dem ringförmigen Raum (7) fließt.

2. Vorrichtung nach Anspruch 1, dadurch gekennzeichnet, daß die Verbindung zwischen dem sekundären Verbindungsstück (4) und dem Inneren des Verbindungsstückes (2) gegenüber der Achse (YY') des sekundären Verbindungsstückes (4) und der Achse (XX') des Verbindungsstückes (2) versetzt ist.

3. Vorrichtung nach Anspruch 1 oder 2, dadurch gekennzeichnet, daß das Formstück (1) mehrere Nuten oder Rillen (10, 11) aufweist.

4. Vorrichtung nach einem der Ansprüche 1-3, dadurch gekennzeichnet, daß das Verbindungsstück (2) an seinem dem Rohr (16) gegenüberliegenden Ende durch ein demontierbares Verschlußstück (3), durch das das Formstück (1, 19, 13) gehalten wird, verschlossen ist.

5. Vorrichtung nach einem der Ansprüche 1-4, dadurch gekennzeichnet, daß das Formstück (1, 13) im wesentlichen zylindrisch ist, wobei die Rille oder Rillen (10) an seiner seitlichen Oberfläche angeordnet sind.

6. Vorrichtung nach einem der Ansprüche 1-4, dadurch gekennzeichnet, daß das Formstück (1) in dem Verbindungsstück (2) einen ringförmigen Raum freiläßt, der mit dem ringförmigen Raum (7) in dem Rohr (16) durch schräge Rillen (11) in Verbindung steht, die in einer oberen Schulter (19) angeordnet sind.

7. Vorrichtung nach einem der Ansprüche 1-4, dadurch gekennzeichnet, daß das Formstück (13) in dem Verbindungsstück (2) um die Achse (XX') drehbar beweglich ist.

8. Vorrichtung nach Anspruch 4, dadurch gekennzeichnet, daß das Formstück (13) in dem Verbindungsstück (2) um eine Achse (12) drehbar beweglich ist, die durch das Verschlußstück (3) gehalten wird.

9. Vorrichtung nach einem der Ansprüche 1-8, dadurch gekennzeichnet, daß das Formstück (1, 19, 13) durch Gießen hergestellt wird.

10. Vorrichtung nach einem der Ansprüche 1-8, dadurch gekennzeichnet, daß das Formstück (1, 19, 13) durch maschinelle Bearbeitung hergestellt wird.

**Claims**

1. An apparatus for the anti-scale treatment of water, comprising a column of permanent magnets (15) separated by spacers (17) and contained in a cylindrical casing (14), this column being arranged in, and coaxially to (XX'), an outer tube (16) whilst forming, between itself (14, 15, 17) and this tube (16), an annular space (7) for the circulation, between an entry connector (1 to 4) and an exit connector (6, 8, 9, 18), of the water to be treated, characterized by the fact that the entry connector (6, 8, 9, 18) comprises a connection (2) coaxial (XX') to the tube (16) which is provided with a secondary connection (4) to a water conduit substantially perpendicular (YY') to the axis (XX') of the tube (16), and by the fact that a shaped piece (1, 19, 13) contained in, and being coaxial (XX') to, the connection (2) has at least one helicoidal channel or groove (10, 11) of small pitch in which the water makes its way between the secondary connection (4) and the annular space (7).

2. An apparatus in accordance with Claim 1, characterized by the fact that the communication between the secondary connection (4) and the interior of the connection (2) is out-of-line (ZZ') in relation to the axis (YY') of the secondary connection (4) and in relation to the axis (XX') of the connection (2).

3. An apparatus in accordance with Claim 1 or Claim 2, characterized by the fact that the shaped piece (1) comprises a plurality of channels or grooves (10, 11).

4. An apparatus in accordance with any one of Claims 1 to 3, characterized by the fact that the connection (2) is closed at its end opposite the tube (16) by a removable stopper (3) supporting the shaped piece (1, 19, 13).

5. An apparatus in accordance with any one of Claims 1 to 4, characterized by the fact that the shaped piece (1, 13) is substantially cylindrical, the channel(s) (10) being made in its lateral surface.

6. An apparatus in accordance with any one of Claims 1 to 4, characterized by the fact that an annular space is left free in the connection (2) by the shaped piece (1), this annular space communicating with the annular space (7) in the tube (16) by means of inclined grooves (11) made in an upper shoulder (19).

7. An apparatus in accordance with any one of Claims 1 to 4, characterized by the fact that the shaped piece (13) is rotationally movable in the connection (2) about its axis (XX').

8. An apparatus in accordance with Claim 4, characterized by the fact that the shaped piece (13) is rotationally movable in the connection (2) about a spindle (12) supported by the stopper (3).

9. An apparatus in accordance with any one of Claims 1 to 8, characterized by the fact that the shaped piece (1, 19, 13) is obtained by casting.

10. An apparatus in accordance with any one of Claims 1 to 8, characterized by the fact that the shaped piece (1, 19, 13) is obtained by machining.

fig : 1

fig : 3

fig : 4

fig : 2